# EUROPÄISCHE PATENTSCHRIFT

(11) **EP 2 607 710 B1**
(45) Veröffentlichungstag und Bekanntmachung des Hinweises auf die Patenterteilung: **08.04.2015**
(21) Anmeldenummer: 12180810.9
(22) Anmeldetag: 17.08.2012
(51) Int. Cl.: F04D 25/06, H02K 11/00, H02K 5/128, F04D 13/06, H02K 5/22, H02K 7/08

(54) **Naßlaufkreiselpumpe**
Wet running circulation pump
Pompe centrifuge de type humide

(30) Priorität: 23.12.2011 EP 11195636
(43) Veröffentlichungstag der Anmeldung: 26.06.2013
(60) Teilanmeldung: 15155953.1
(73) Patentinhaber: Grundfos Holding A/S, 8850 Bjerringbro (DK)
(72) Erfinder: Damm, Therkel, 8600 Silkeborg (DK); Bøndergaard, Søren, 8660 Skanderborg (DK)
(74) Vertreter: Patentanwälte Vollmann & Hemmer

(56) Entgegenhaltungen:
- DE-A1- 1 613 154
- DE-A1- 1 802 561
- DE-A1- 1 907 379
- DE-A1- 2 048 467
- DE-A1- 2 207 647
- DE-A1- 10 144 653
- DE-A1- 19 943 862
- FR-A1- 2 262 433
- JP-A- 6 105 501
- NL-C- 136 978
- US-A- 3 667 870

## Beschreibung

Die Erfindung betrifft eine Naßlaufkreiselpumpe mit den im Oberbegriff des Anspruchs 1 angegebenen Merkmalen.

Derartige elektromotorisch angetriebene Kreiselpumpen, bei denen der Rotor des Elektromotors durch ein Spaltrohr vom Stator getrennt ist, zählen in einer Vielzahl von Bauvarianten, insbesondere für Pumpenaggregate kleinerer und mittlerer Leistung mannigfaltig zum Stand der Technik. Dabei dient das Spaltrohr, welches als Spaltrohrtopf ausgebildet sein kann, zum einen zur Abdichtung des Stators gegenüber der Pumpenflüssigkeit, zum anderen der Aufnahme eines oder zweier Lager, mit denen der Rotor drehbar gelagert ist. Bei derartigen Spaltrohrpumpen weist der Rotor eine Welle auf, die typischerweise am motorseitigen Ende des Spaltrohres sowie im Bereich einer Lagerplatte, die im Bereich zwischen Pumpe und Motor angeordnet ist, drehbar gelagert und an seinem motorfernen Ende mit einem oder bei mehrstufigen Kreiselpumpen mit mehreren Kreisel- bzw. Laufrädern verbunden ist.

Dabei zählt es bei Kreiselpumpen, wie sie als Heizungsumwälzpumpen beispielhaft eingesetzt werden, zum Stand der Technik, das Spaltrohr zusammen mit der Lagerplatte einstückig als Tiefziehbauteil in Form eines Spaltrohrtopfes auszubilden, der beispielsweise aus Edelstahl gefertigt ist. Derartige Spaltrohrtöpfe haben sich in der Praxis bestens bewährt und werden insbesondere in Verbindung mit Asynchronmotoren vorteilhaft eingesetzt.

Vom Wirkungsgrad her besser sind allerdings Permanentmagnetmotoren, bei denen metallische Spoltrohre allerdings von Nachteil sind, da sie Wirbelstromverluste mit sich bringen.

Auch zählt es zum Stand der Technik, ein Spaltrohr zwischen Rotor und Stator einzusetzen, in dem der Rotor läuft und welches nahe seinen Enden jeweils über eine Dichtung einerseits gegenüber dem Stator und andererseits gegenüber der Lagerplatte eingegliedert sind. Eine solche beidseitige Abdichtung ist jedoch zum einen konstruktiv aufwändig und zum anderen stör- und verschleißanfällig.

Vor diesem Hintergrund liegt der Erfindung die Aufgabe zugrunde eine Kreiselpumpe der eingangs genannten Art so auszubilden, dass diese einerseits möglichst kostengünstig herstellbar ist und andererseits mit möglichst gutem Wirkungsgrad über lange Zeit stabil und verschleißarm läuft.

Diese Aufgabe wird gemäß der Erfindung durch eine Naßlaufkreiselpumpe mit den in Anspruch 1 angegebenen Merkmalen gelöst. Vorteilhafte Ausgestaltungen der Erfindung sind in den Unteransprüchen, der nachfolgenden Beschreibung und der Zeichnung angegeben.

Die erfindungsgemäße Naßlaufkreiselpumpe weist einen Elektromotor und eine davon angetriebene Kreiselpumpe auf, wobei der Elektromotor einen Rotor hat, der innerhalb eines Stators angeordnet ist und zwischen Rotor und Stator ein Spaltrohrtopf vorgesehen ist, welcher ein motorseitiges Lager für den Rotor trägt. Die Naßlaufkreiselpumpe weist ferner eine Lagerplatte auf, welche ein pumpenseitiges Lager für den Rotor trägt, die gehäuseseitig festgelegt ist. Dabei ist gemäß der Erfindung die Anordnung und Ausbildung derart, dass die Lagerplatte im Bereich des Lagers in den Spaltrohrtopf eintaucht und mindestens eine Radialdichtung zwischen Spaltrohrtopf und Lagerplatte vorgesehen ist. Grundgedanke der vorliegenden Erfindung ist es, die an sich vorteilhafte Ausbildung des Spaltrohres als Spaltrohrtopf vorzusehen, jedoch aus stabilitäts- und auch fertigungstechnischen Gründen, die Lagerplatte als gesondertes Bauteil derart auszubilden und anzuordnen, dass diese im Bereich des Lagers in den Spaltrohrtopf eintaucht. Hierdurch ist erreicht, dass im Bereich des Lagers etwa parallele Ringflächen, nämlich zwischen der Lagerplatte und dem Spaltrohrtopf gebildet sind, die in einfacher Weise durch mindestens eine Radialdichtung zueinander abgedichtet werden können. Es handelt sich hierbei um nicht drehende, d. h. quasi starre Bauteile, die mit einfachen Dichtmitteln, wie beispielsweise mit einem oder mehreren O-Ringen oder einer Lippendichtung langzeitstabil zueinander abgedichtet werden können. Diese erfindungsgemäße Konstruktion schafft also zum motorseitigen Ende des Spaltrohres hin aufgrund der Topfausbildung eine absolute und verschleißfreie Dichtigkeit zwischen Rotor und Stator. Im Bereich des Lagers hingegen erfolgt eine stabile Aufnahme durch die Lagerplatte und eine zuverlässige Abdichtung zwischen Lagerplatte und Spaltrohrtopf mittels der mindestens einen Radialdichtung. Durch die Trennung von Lagerplatte und Spaltrohrtopf werden die durch den Flüssigkeitsdruck erzeugten Kräfte im Bereich des Spaltrohrtopfes nur über die senkrecht zur Längsachse des Spaltrohrtopfes verlaufende Querfläche aufgebaut, d. h. im Boden des Spaltrohrtopfes, die vom Motorgehäuse, insbesondere dem Statorgehäuse durch einfache Abstützung aufgenommen werden können. Die aufgrund der größeren Fläche entstehenden druckbedingten höheren Kräfte an der Lagerplatte werden durch diese selbst getragen, nicht auf den Spaltrohrtopf übertragen und durch geeignete Eingliederung der Lagerplatte in die Gehäusestruktur überführt.

Eine besonders vorteilhafte Ausbildung ergibt sich dadurch, dass der Spoltrohrtopf axial schwimmend angeordnet ist. Unter axial schwimmend im Sinne der Erfindung ist zu verstehen, dass der Spaltrohrtopf sich um ein Maß in axialer Richtung verschieben kann. Eine solche Anordnung hat zum einen fertigungstechnische Vorteile, da die Toleranzen des Spaltrohrtopfes in axialer Richtung vergleichsweise groß sein können und gewährleistet im Betrieb eine freie Wärmedehnung oder Verschiebung aufgrund auftretender Druckkräfte und zwar unabhängig vom verwendeten Material und ohne Einfluss auf die Dichtigkeit der Anordnung, welche durch die mindestens eine Radialdichtung stets gewährleistet bleibt.

Gemäß einer vorteilhaften Weiterbildung der Erfindung ist es vorgehen, Zentriermittel innerhalb des Stators bzw. innerhalb des Motorgehäuses vorzusehen, welche das geschlossene Ende des Spaltrohrtopfes gehäuseseitig führen. Solche Zentriermittel können durch entsprechende Führungsrippen, einen Konus oder dergleichen gebildet sein, welche dafür sorgen, dass das geschlossene Ende des Spaltrohrtopfes selbsttätig in seine bestimmungsgemäße zentrale Position innerhalb des Stators geführt wird. Da der Spaltrohrtopf vorzugsweise schwimmend gelagert ist, kann dieser soweit in die vorzugsweise verjüngend zulaufenden Zentriermittel eingeschoben werden, bis dieser zentrisch und fest angeordnet ist.

Die Lagerplatte kann grundsätzlich an beliebiger geeigneter Stelle des Gehäuses befestigt oder eingegliedert werden. Besonders vorteilhaft ist es jedoch, wenn bei einem Gehäuse, welches in ein Motorgehäuse und ein Pumpengehäuse geteilt ist, die Lagerplatte zwischen Motor-und Pumpengehäuse eingegliedert ist. Dann sind keine zusätzlichen Befestigungsmittel erforderlich. Die Lagerplatte wird vielmehr durch dieselbe Verbindung befestigt, mit der auch die Gehäuseteile zueinander fixiert werden, beispielsweise durch Zuganker oder ein Spannband.

Um die mindestens eine Radialdichtung zuverlässig und sicher innerhalb des Ringspaltes zwischen Lagerplatte und Spaltrohrtopf zu halten, ist gemäß der Erfindung ein Bauteil, insbesondere ein Ring vorgesehen, der vorzugsweise lagerplattenseitig zwischen dem das Lager aufnehmenden Teil der Lagerplatte und dem offenen Ende des Spaltrohrtopfes angeordnet ist und der die mindestens einer Radialdichtung formschlüssig in Axialrichtung sichert. Ein solches Bauteil kann beispielsweise aus Kunststoff sein und zu Montagezwecken lagerplattenseitig aufgesteckt sein. Gemäß der Erfindung ist ein solches Bauteil nicht nur als Formschlusssicherung für die Radialdichtung vorgesehen, sondern weist darüber hinaus Haltemittel auf, welche das Bauteil mit der mindestens einen Radialrichtung verbinden und damit die mindestens eine Radialdichtung in ihrer bestimmungsgemäßen Position hält. Hierzu weist die mindestens eine Radialdichtung gemäß der Erfindung einen Halteabschnitt auf, der formschlüssig in eine entsprechende Halteausnehmung des Bauteils eingreift. Dabei ist die Anordnung gemäß der Erfindung so gestaltet, dass der Halteabschnitt bei nicht montierter Anordnung in die beispielsweise nutähnliche Halteausnehmung des Bauteils eingliedern lässt und erst durch den herübergeschobenen Spaltrohrtopf auch in einer anderen als der axialen Richtung formschlüssig gesichert wird.

Der erfindungsgemäße Spaltrohrtopf kann aus unterschiedlichen für den jeweiligen Einsatzzweck geeigneten Materialien hergestellt sein. Besonders vorteilhaft ist es insbesondere beim Einsatz eines Permanentmagnetmotors den Spaltrohrtopf aus Kunststoff, vorzugsweise faserarmierten Kunststoff herzustellen, um Wirbelstromverluste zwischen Rotor und Stator möglichst gering zu halten. Dabei sorgt die Faserarmierung für die erforderliche Festigkeit.

Die Lagerplatte hingegen kann gemäß einer vorteilhaften Weiterbildung der Erfindung aus einem metallischen Werkstoff, vorzugsweise Edelstahl gebildet sein. Hierdurch können die dort auftretenden druckbedingten Kräfte sicher aufgenommen werden. Auch kann das Formteil kostengünstig hergestellt werden.

Vorteilhaft weist der Spaltrohtropf nahe oder an seinem offenen Ende einen sich vom rohrförmigen Körper des Spaltrohrtopfes nach außen erstreckenden, vorzugsweise umlaufenden Kragen aufweist. Ein solcher Kragen erhöht einerseits die Stabilität des offenen Endes des Spaltrohrtopfes und sorgt andererseits dafür, dass möglicherweise in diesem Bereich befindliche Flüssigkeit, sei es dass diese durch eine Undichtigkeit oder durch Kondensation eintritt, gezielt abgeführt wird, indem sie an diesem Kragen abtropft. Diese Anordnung ist insbesondere zweckmäßig für ein Naßlaufkreiselpumpenaggregat, das zum Betrieb mit horizontal angeordneter Welle bestimmt und ausgebildet ist und das im Motorgehäuse vorzugsweise an der Unterseite mindestens eine Öffnung zur Abfuhr von Flüssigkeit aufweist. Eine solche Flüssigkeitsabfuhröffnung ist zweckmäßigerweise als Labyrinthkanal ausgebildet, um sicherzustellen, dass kein von außen auf das Gehäuse spritzendes Wasser in dieses eindringen kann. Insbesondere bei Naßlaufkreiselpumpen mittlerer Baugröße ist es üblich, diese so zu konzipieren, dass die Einbaulage konstruktionsbedingt vorgegeben ist. Hierdurch ergeben sich in der Praxis zahlreiche Vorteile.

Die Flüssigkeitsabfuhröffnung ist vorteilhaft in dem Bereich angeordnet, in dem auch der Kragen des Spaltrohrtopfes liegt, damit dort abtropfende Flüssigkeit auf möglich direktem Wege aus dem Gehäuse durch die dort zweckmäßigerweise vorgesehene Öffnung abgeführt werden kann.

Besonders vorteilhaft ist der Elektromotor der Naßlaufkreiselpumpe ein Permanentmagnetrotor, vorzugsweise ein drehzahlstellergesteuerter Permanentmagnetrotor. Hierdurch wird in Verbindung mit einem aus Kunststoff bestehenden Spaltrohrtopf ein besonders hoher Wirkungsgrad erreicht. Die Ansteuerung durch einen Drehzahlsteller ermöglicht eine vergleichsweise kleine Baugröße des Aggregats bei hoher hydraulischer Leistung und steigert darüber hinaus auch die Effektivität des Aggregates.

Die mindestens eine Radialdichtung ist vorteilhaft als Lippendichtung ausgebildet, d. h. sie weist eine radial zum rohrförmigen Teil des Spaltrohrtopfes gerichtete Dichtlippe auf und einen radial nach innen gerichteten flächigen Dichtsitz, der an der Lagerplatte, insbesondere an einem zylindrischen Abschnitt der Lagerplatte flächig anliegt. Eine solche Dichtungsanordnung gewährleistet, dass bei Axialverschiebungen zwischen Lagerplatte und Spaltrohrtopf, sei es durch Wärmedehnungen oder andere Einflüsse, der Spaltrohrtopf an der Lippe vorbeigleitet und dabei die Dichtung definiert am Dichtsitz an der Lagerplatte verbleibt und so eine definierte und zuverlässige Abdichtung gewährleistet.

Anstelle eines solchen Dichtrings mit Dichtlippe können auch in Achsrichtung hintereinander zwei oder mehrere solcher Dichtringe angeordnet sein, um sicherzustellen, dass auch bei Versagen einer Dichtung keine Flüssigkeit eindringt. Eine solche Abdichtung kann auch durch Anordnung einer oder mehrerer axial hintereinanderliegender O-Ringe gebildet sein, wobei entweder spaltrohrseitig oder lagerplattenseitig jeweils eine umlaufende Nut als Dichtsitz zweckmäßigerweise vorgesehen wird.

Vorteilhaft ist der rohrförmige Teil des Spaltohrtopfes über den Topfbogen hinaus verlängert. Eine solche Verlängerung ist fertigungstechnisch, insbesondere bei einem faserarmierten Spaltrohrtopf besonders günstig. Die Faserarmierung kann dann auch in dem über den Topfboden hinaus verlängerten Bereich erfolgen. Dieser verlängerte Bereich bildet einen Teil der Zentriermittel und wird statorseitig entsprechend ergänzt, typischerweise durch einen Zentrierkonus oder aber auch durch Zentrierrippen, die innen und/oder außen am Ende des Spaltrohrtopfes angreifen. Die Lagerplatte, welche das pumpenseitige Lager des Rotors ausnimmt, ist gemäß einer vorteilhaften Weiterbildung der Erfindung mit einem hohlzylindrischen Abschnitt versehen, der innen das Lager aufnimmt und an dessen Außenseite die Radialdichtung vorteilhaft mit ihrem flächigen Dichtsitz anliegt. Ein solcher hohlzylindrischer Abschnitt kann durch plastische Verformung aus einem Blechabschnitt kostengünstig hergestellt werden und gegebenenfalls spanabhebend bearbeitet sein, an der Innenseite zur Aufnahme des Lagers und an der Außenseite zur Schaffung des Dichtsitzes. Ein solcher hohlzylindrischer Abschnitt kann gegebenenfalls auch als Drehteil aus einem Rohrabschnitt gebildet und durch Schweißen mit dem übrigen Teil der Lagerplatte verbunden sein.

Die Erfindung ist nachfolgend anhand eines in der Zeichnung dargestellten Ausführungsbeispiels näher erläutert. Es zeigen
- Fig. 1: eine Ansicht einer erfindungsgemäßen Naßlaufkreiselpumpe in Richtung der Drehachse des Rotors von der Motorseite,
- Fig. 2: einen Schnitt längs der Schnittlinie II-II in Fig. 1,
- Fig. 3: in vergrößerter Darstellung einen Längsschnitt durch den Motor,
- Fig. 4: die Einzelheit IV in Fig. 3 in vergrößerter Darstellung,
- Fig. 5: eine Ansicht des Motorgehäuses von der zum Pumpengehäuse weisenden Seite,
- Fig. 6: eine perspektivische Ansicht des Motorgehäuses,

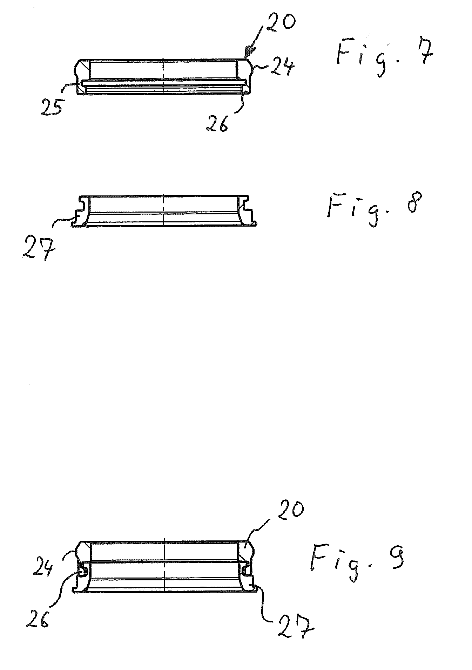

- Fig. 7: einen Schnitt durch eine Radialdichtung,
- Fig. 8: einen Schnitt durch einen Haltering für die Radialdichtung und
- Fig. 9: einen Schnitt durch Haltering und Radialdichtung im zusammengefügten Zustand.

Die dargestellte Naßlaufkreiselpumpe weist einen Elektromotor 1 mit einem Motorgehäuse 2 auf, welches einen Stator 3 aufnimmt, in dem ein Rotor 4 drehbar gelagert ist, der eine Welle 5 aufweist, an deren pumpenseitigen Ende ein Laufrad 6 einer von diesem Elektromotor 1 angetriebenen Kreiselpumpe 7 angeordnet ist.

Die Kreiselpumpe 7 weist ein Pumpengehäuse 8 auf, das in der dargestellten Ausführungsform als Inline-Gehäuse ausgebildet ist und einen Saugstutzen 9 sowie einen Druckstutzen 10 aufweist, die über ein Spiralgehäuse 11 verbunden sind, in dem das Laufrad 6 in üblicher Weise angeordnet ist.

Der Elektromotor 1 und die Kreiselplumpe 7 sind über Gehäuseflansche miteinander verbunden, die bei der dargestellten Ausführung mittels eines Klemmrings 12 form- und kraftschlüssig zusammengehalten werden.

Das aus Elektromotor 1 und Kreiselpumpe 7 bestehende Pumpenaggregat ist als Naßläufer ausgebildet, d. h. der Rotor 4 des Elektromotors 1 läuft in einer Flüssigkeit, die durch ein Spaltrohr, hier in Form eines Spaltrohrtopfes 13, von dem die elektrischen Anschlüsse und Bauteile aufweisenden Stator 3 getrennt ist. Der Spaltrohrtopf 13 weist eine langegestreckte zylindrische Form auf und hat nahe seinem motorseitigen Ende einen Boden 14. Der zylindrische Körper des Spaltrohrtopfes 13 ist über den Boden 14 hinaus fortgesetzt und bildet dort Teil einer Zentrierhilfe, deren anderer Teil durch einen axial nach innen vorspringenden konusförmigen Gehäuseteil 15 des Motorgehäuses 2 gebildet wird, der durch den rohrförmigen, über den Boden 14 überstehenden Teil des Spaltrohrtopfes 13 teilweise überdeckt wird und auf diese Weise das motorseitige Ende des Spaltrohrtopfes 13 gegenüber dem Motorgehäuse 2 führt und zentriert. Darüber hinaus weist der Spaltrohrtopf 13 an seinem pumpenseitigen Ende einen umlaufenden und radial nach außen vorspringenden Kragen 16 auf, der die Topfstruktur am oberen Ende verstärkt und zugleich dazu dient, sich dort sammelnde Flüssigkeit gezielt abzuführen. Der Spaltrohrtopf 13 besteht aus Kunststoff und ist faserverstärkt in der vorliegenden Ausführung durch eine schraubenlinienförmig um den zylindrischen Teil des Topfes gewickelte Armierungsfasern. Das Spaltrohr, welches den Stator 3 mit den nicht im einzelnen dargestellten Statorwicklungen gegenüber den mit Permanentmagneten bestückten Rotor 4 trennt, erzeugt, da es aus Kunststoff ist, nur minimale Wirbelstromverluste, das den ohnehin hohen Wirkungsgrad des Permanentmotors weiter erhöht.

Innerhalb des Spaltrohrtopfes ist nahe des Bodens 14 ein motorseitiges Lager 17 für die Welle 3 vorgesehen, die eine zentrale Längsbohrung aufweist. Ein weiteres pumpenseitiges Lager 18 lagert die Welle 5 im Bereich zwischen den motorseitigen Teil und dem Laufrad 6. Das pumpenseitige Lager 18 ist in einer Lagerplatte 19 angeordnet, welche zwischen den Flanschen von Motorgehäuse 2 und Pumpengehäuse 8 formschlüssig und dicht eingegliedert ist und die zusammen mit dem Spaltrohrtopf 13 und einer dazwischen eingegliederten Radialrichtung 20 das Pumpengehäuse 8 hermetisch gegenüber dem Motorgehäuse 2, insbesondere dem den Stator 3 aufnehmenden Teil des Motorgehäuses 2 abtrennt.

Die Lagerplatte 19 ist aus Edelstahl gebildet und erstreckt sich von ihrem umlaufenden Flansch 21 radial nach innen, schräg in das Pumpengehäuse 8 hineinlaufendend, um sich dann mit einem hohlzylindrischen Abschnitt 22 bis in das pumpenseitige Ende des Spaltrohrtopfes 3 zu erstrecken. Im Bereich dieses hohlzylindrischen Abschnitts 22 ist das pumpenseitige Lager 18 aufgenommen, welches ein kombiniertes Axial-/Radiallager ist. Innerhalb des hohlzylindrischen Abschnitts 22 ist das Radial/-Radiallager festgelegt, in welchem die Welle 5 drehbar gelagert ist. Ein Axiallager ist durch die motorseitige Stirnfläche des Radiallagers in Verbindung mit einem drehfest auf der Welle 5 angeordneten Gegenlager 23 gebildet. Dieses Axiallager dient dazu, die hydraulisch bedingten Axial kräfte der Pumpe aufzunehmen.

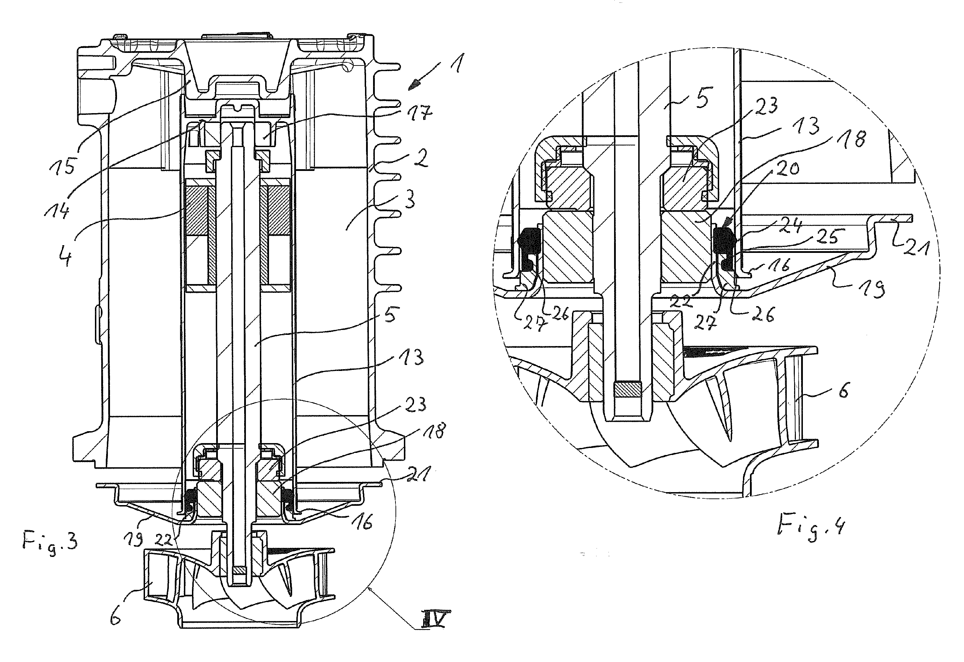

Die Außenseite des hohlzylindrischen Abschnitts 22 bildet einen flächigen ringförmigen Dichtsitz für die zylindrische Innenfläche der Radialrichtung 20, deren Außenfläche durch eine radial vorspringende Dichtlippe 24 gebildet ist, welche an der Innenseite des Spaltrohrtopfes 13 anliegt. Wie die Figuren 3 und 4 verdeutlichen, reicht der Spaltrohrtopf 13 nicht bis zur Lagerplatte 19, sondern endet mit Abstand dazu, sodass dieser schwimmend gelagert ist, sich also in Axialrichtung bewegen, ausdehnen und verschieben kann, wobei die Dichtlippe 24 dafür sorgt, dass stets eine zuverlässige Abdichtung zwischen Spaltrohrtopf 13 und Lagerplatte 19 gebildet ist.

Die Radialdichtung 20 besteht aus der eigentlichen im Querschnitt im Wesentlichen rechteckigen umlaufenden Dichtung mit der radial nach außen weisenden Dichtlippe 24. Sie weist einen axial über einen umlaufenden Steg 25 anschließend ebenfalls ringförmig umlaufenden Halteabschnitt 26 auf, der in eine umlaufende Nut eines aus Kunststoff bestehenden Halterings 27 eingreift, welcher, wie Fig. 4 verdeutlicht, in dem Bereich zwischen hohlzylindrischen Abschnitt 22, der übrigen Lagerplatte 19 und dem pumpenseitigen Ende des Spaltrohrtopfes 13 eingegliedert ist. Wie die Fig. 4 verdeutlicht, ist der Halteabschnitt 26, wenn dieser in der Nut des Halterings 27 liegt, in Einbaulage formschlüssig durch die umgebenden Bauteile gehalten.

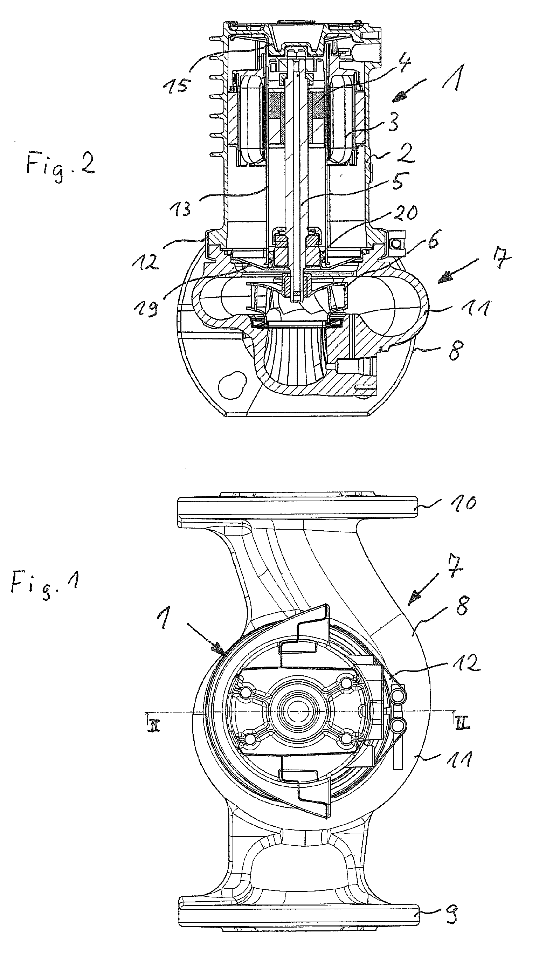

Im Gegensatz zu Fig. 2 ist in den Figuren 3 und 4 die Radialdichtung in unkomprimierter Form dargestellt. Tatsächlich ist diese Dichtung 20 in Einbaulage zwischen dem hohlzylindrischen Abschnitt 22 und der ebenfalls hohlzylinderförmigen Innenseite des Spaltrohrtopfes 13 eingegliedert, wie in Fig. 2 dargestellt.

Der umlaufende Kragen 16 dient nicht nur zur Stabilisierung des pumpenseitigen Endes des Spaltrohrtopfes 13 sondern darüber hinaus auch als Tropfkante zur Abfuhr von sich dort möglicherweise ansammelnder Flüssigkeit. Da die Pumpe zum Betrieb mit waagerechter Welle bestimmt und ausgebildet ist, also so, wie sie in Fig. 1 dargestellt ist, weist das Motorgehäuse in seinem Flanschbereich an seiner Unterseite eine Öffnung 28 zur Abfuhr der in Einbaulage am Kragen 16 nach unten tropfenden Flüssigkeit auf. Die Öffnung 28 ist innerhalb des Motorgehäuses über Labyrinthkanäle 29 in zwei Öffnungen 30 an der Unterseite des Motorgehäuses geführt. Auf diese Weise ist sichergestellt, dass von außen auf das Motorgehäuse gerichtetes Spritzwasser nicht nach innen eindringen kann.

Von dem in den Figuren 1 und 2 dargestellten Pumpenaggregat ist ein auf dem Motorgehäuse 2 angeordneter Klemmenkasten, der auch einen zur Steuerung der Drehzahl des Motors vorgesehenen Frequenzumrichter aufweist, nicht dargestellt.

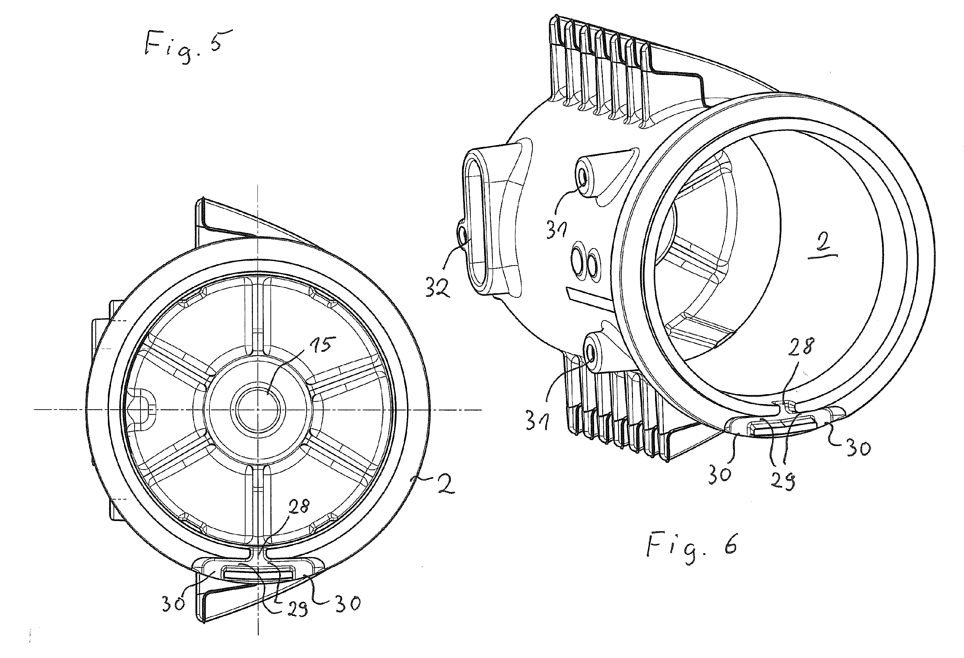

In Fig. 6 sind im Übrigen die Anschlüsse für den nicht dargestellten Klemmenkasten sichtbar, nämlich zwei Schraubanschlüsse 31 und ein zentraler Anschluss 32 nahe dem Ende des Motorgehäuses 2, an dem zum einen eine Schraubbefestigung und zum anderen die Durchführung der Anschlussleitungen erfolgt.

### Bezugszeichenliste

- 1: Elektromotor
- 2: Motorgehäuse
- 3: Stator
- 4: Rotor
- 5: Welle
- 6: Laufrad
- 7: Kreiselpumpe
- 8: Pumpengehäuse
- 9: Saugstutzen
- 10: Druckstutzen
- 11: Spiralgehäuse
- 12: Klemmring
- 13: Spaltrohrtopf
- 14: Boden von 13
- 15: konusförmiger Teil des Motorgehäuses
- 16: Kragen von 13
- 17: bodenseitiges Lager
- 18: motorseitiges Lager
- 19: Lagerplatte
- 20: Radialdichtung
- 21: Flansch der Lagerplatte
- 22: hohlzylindrischer Abschnitt von 19
- 23: Gegenlager auf der Welle 5
- 24: Dichtlippe
- 25: Steg
- 26: Halteabschnitt
- 27: Haltering
- 28: Flüssigkeitsabführöffnung
- 29: Kanäle
- 30: Öffnungen an der Unterseite des Motorgehäuses
- 31: Schraubenanschlüsse
- 32: Anschluss

## Patentansprüche

1. Naßlaufkreiselpumpe mit einem Elektromotor (1) und einer davon angetriebenen Kreiselpumpe (7), wobei der Elektromotor (1) einen Rotor (4) aufweist, der innerhalb eines Stators (3) angeordnet ist, wobei zwischen Rotor (4) und Stator (3) ein Spaltrohrtopf (13) vorgesehen ist, welcher ein motorseitiges Lager (17) für den Rotor (4) trägt und mit einer Lagerplatte (19), welche ein pumpenseitiges Lager (18) für den Rotor trägt, wobei die Lagerplatte (19) gehäuseseitig festgelegt ist und im Bereich des Lagers (18) in den Spaltrohrtopf (13) eintaucht, wobei zwischen Spaltrohrtopf (13) und Lagerplatte (19) mindestens eine Radialdichtung (20) vorgesehen ist, **dadurch gekennzeichnet, dass** ein Bauteil (27) vorgesehen ist, welches zwischen dem das Lager (18) aufnehmenden Teil (22) der Lagerplatte (19) und dem offenen Ende des Spaltrohrtopfes (13) angeordnet ist, das die mindestens eine Radialdichtung (20) formschlüssig in Axialrichtung sichert, wobei die mindestens eine Radialdichtung durch ein Radialdichtring (20) gebildet ist, der einen Halteabschnitt (26) aufweist, welcher formschlüssig in einer entsprechenden Halteausnehmung des Bauteils (27) eingegliedert ist.

2. Naßlaufkreiselpumpe nach Anspruch 1, **dadurch gekennzeichnet, dass** der Spaltrohrtopf (13) axial schwimmend angeordnet ist.

3. Naßlaufkreiselpumpe nach Anspruch 1 oder 2, **dadurch gekennzeichnet, dass** Zentriermittel (15) vorgesehen sind, welche das geschlossene Ende des Spaltrohrtopfes (13) gehäuseseitig führen.

4. Naßlaufkreiselpumpe nach einem der vorhergehenden Ansprüche, **dadurch gekennzeichnet, dass** die Lagerplatte (19) zwischen Motor- und Pumpengehäuse (2 und 8) eingegliedert ist.

5. Naßlaufkreiselpumpe nach einem der vorhergehenden Ansprüche, **dadurch gekennzeichnet, dass** das Bauteil (27) ein Ring ist, welcher vorzugsweise lagerplattenseitig angeordnet ist.

6. Naßlaufkreiselpumpe nach einem der vorhergehenden Ansprüche, **dadurch gekennzeichnet, dass** der Spaltrohrtopf (13) aus vorzugsweise faserarmiertem Kunststoff besteht.

7. Naßlaufkreiselpumpe nach einem der vorhergehenden Ansprüche, **dadurch gekennzeichnet, dass** die Lagerplatte (19) aus metallischem Werkstoff, vorzugsweise Edelstahl besteht.

8. Naßlaufkreiselpumpe nach einem der vorhergehenden Ansprüche, **dadurch gekennzeichnet, dass** der Spaltrohrtopf (13) nahe oder an seinem offenen Ende einen sich vom rohrförmigen Körper des Spaltrohrtopfes (13) nach außen erstreckenden, vorzugsweise umlaufenden Kragen (16) aufweist.

9. Naßlaufkreiselpumpe nach einem der vorhergehenden Ansprüche, **dadurch gekennzeichnet, dass** die Pumpe (7) zum Betrieb mit horizontal angeordneter Welle (5) bestimmt und ausgebildet ist und dass im Motorgehäuse (2) vorzugsweise an der Unterseite mindestens eine Öffnung (28) zur Abfuhr von Flüssigkeit vorgesehen ist.

10. Naßlaufkreiselpumpe nach einem der vorhergehenden Ansprüche, **dadurch gekennzeichnet, dass** die mindestens eine Öffnung (28) axial in dem Bereich angeordnet ist, in dem auch der Kragen (16) liegt.

11. Naßlaufkreiselpumpe nach einem der vorhergehenden Ansprüche, **dadurch gekennzeichnet, dass** der Motor (1) ein vorzugsweise drehzahlstellergesteuerter Permanentmagnetmotor (1) ist.

12. Naßlaufkreiselpumpe nach einem der vorhergehenden Ansprüche, **dadurch gekennzeichnet, dass** die mindestens eine Radialdichtung (20) eine radial zum rohrförmigen Teil des Spaltrohrtopfes (13) gerichtete Dichtlippe (24) aufweist und einen radial nach innen gerichteten flächigen Dichtsitz an der Lagerplatte (19) aufweist.

13. Naßlaufkreiselpumpe nach einem der vorhergehenden Ansprüche, **dadurch gekennzeichnet, dass** der rohrförmige Teil des Spaltrohrtopfes (13) über den Topfboden (14) hinaus verlängert ist.

14. Naßlaufkreiselpumpe nach einem der vorhergehenden Ansprüche, **dadurch gekennzeichnet, dass** die Lagerplatte (19) einen hohlzylindrischen Abschnitt (22) aufweist, der innen das Lager (18) aufnimmt und an dessen Außenseite die Radialdichtung (20) anliegt.

## Claims

1. A wet-running centrifugal pump with an electric motor (1) and with a centrifugal pump (7) which is driven thereby, wherein the electric motor (1) comprises a rotor (4) which is arranged within a stator (3), wherein a canned pot (13) which carries a motor-side bearing (17) for the rotor (4) is provided between the rotor (4) and the stator (3), and with a bearing plate (19) which carries a pump-side bearing (18) for the rotor (4), wherein the bearing plate (19) is fixed on the housing side, and in the region of the bearing (18) immerses into the canned pot (13), wherein at least one radial seal (20) is provided between the canned pot (13) and the bearing plate (19), **characterised in that** a component (27) is provided, said component being arranged between the part (22) of the bearing plate (19) which receives the bearing (18), and the open end of the canned pot (13), and securing the at least one radial seal (20) with a positive fit in the axial direction, wherein the at least one radial seal is formed by a radial sealing ring (20) comprising a holding section (26) which is integrated with a positive fit in a corresponding holding recess of the component (27).

2. A wet-running centrifugal pump according to claim 1, **characterised in that** the canned pot (13) is arranged in an axially floating manner.

3. A wet-running centrifugal pump according to claim 1 or 2, **characterised in that** centring means (15) are provided, which on the housing side guide the closed end of the canned pot (13).

4. A wet-running centrifugal pump according to one of the preceding claims, **characterised in that** the bearing plate (19) is integrated between the motor housing and pump housing (2 and 8).

5. A wet-running centrifugal pump according to one of the preceding claims, **characterised in that** the component (27) is a ring which is preferably arranged on the bearing plate side.

6. A wet-running centrifugal pump according to one of the preceding claims, **characterised in that** the canned pot (13) consists of preferably fibre-reinforced plastic.

7. A wet-running centrifugal pump according to one of the preceding claims, **characterised in that** the bearing plate (19) consists of metallic material, preferably stainless steel.

8. A wet-running centrifugal pump according to one of the preceding claims, **characterised in that** the canned pot (13) close to or at its open end comprises a preferably peripheral collar (16) which extends outwards from the tubular body of the canned pot (13).

9. A wet-running centrifugal pump according to one of the preceding claims, **characterised in that** the pump (7) is envisaged and designed for operation with a horizontally arranged shaft (5) and that at least one opening (28) for the discharge of fluid is provided in the motor housing (2), preferably on the lower side.

10. A wet-running centrifugal pump according to one of the preceding claims, **characterised in that** the at least one opening (28) is arranged axially in the region, in which the collar (16) also lies.

11. A wet-running centrifugal pump according to one of the preceding claims, **characterised in that** the motor (1) is a permanent magnet motor (1) which is preferably controlled by a speed controller.

12. A wet-running centrifugal pump according to one of the preceding claims, **characterised in that** the at least one radial seal (20) comprises a sealing lip (24) which is directed radially to the tubular part of the canned pot (13) and comprises a radially inwardly directed, flat sealing seat on the bearing plate (19).

13. A wet-running centrifugal pump according to one of the preceding claims, **characterised in that** the tubular part of the canned pot (13) is extended beyond the pot base (14).

14. A wet-running centrifugal pump according to one of the preceding claims, **characterised in that** the bearing plate (19) has a hollow-cylindrical section (22) which on the inside receives the bearing (18) and on whose outer side the radial seal (20) bears.

## Revendications

1. Pompe centrifuge de type humide comprenant un moteur électrique (1) et une pompe centrifuge (7) entraînée par celui-ci, cependant le moteur électrique (1) présentant un rotor (4) qui est disposé à l'intérieur d'un stator (3), où il est prévu entre le rotor (4) et le stator (3) un pot formant gaine (13) qui porte un palier côté moteur (17) pour le rotor (4), et avec une plaque d'appui (19) qui porte un palier côté pompe (18) pour le rotor, la plaque d'appui (19) étant fixée côté carter et étant plongée dans le pot formant gaine (13) dans la région du palier (18), où au moins un joint d'étanchéité radiale (20) est prévue entre le pot formant gaine (13) et la plaque d'appui (19), **caractérisée en ce qu'**il est prévu un élément structurel (27) qui est disposé entre la partie (22) de la plaque d'appui (19) recevant le palier (18) et l'extrémité ouverte du pot formant gaine (13) et qui assure l'au moins au nombre de une par forme, le joint d'étanchéité radiale dans la direction axiale le joint d'étanchéité radiale (20), étant constituée par une bague d'étanchéité radiale (20) qui présente une partie de fixation (26) qui est incorporé par forme dans un évidement de maintien correspondant de l'élément structurel (27).

2. Pompe centrifuge de type humide selon la revendication 1, **caractérisée en ce que** le pot formant gaine (13) est disposé de façon flottante dans la direction axiale.

3. Pompe centrifuge de type humide selon la revendication 1 ou 2, **caractérisée en ce que** sont prévus des moyens de centrage (15) qui guident l'extrémité fermée du pot formant gaine (13) côté carter.

4. Pompe centrifuge de type humide selon l'une des revendications précédentes, **caractérisée en ce que** la plaque d'appui (19) est intégrée entre le carter de moteur et le carter de pompe (2 et 8).

5. Pompe centrifuge de type humide selon l'une des revendications précédentes, **caractérisée en ce que** l'élément structurel (27) est une bague qui est de préférence disposée côté plaque d'appui.

6. Pompe centrifuge de type humide selon l'une des revendications précédentes, **caractérisée en ce que** le pot formant gaine (13) est de préférence composé d'une matière plastique armée de fibres.

7. Pompe centrifuge de type humide selon l'une des revendications précédentes, **caractérisée en ce que** la plaque d'appui (19) est composée d'un matériau métallique, de préférence de l'acier inoxydable.

8. Pompe centrifuge de type humide selon l'une des revendications précédentes, **caractérisée en ce que** le pot formant gaine (13) présente, à proximité ou au niveau de son extrémité ouverte, une collerette (16) s'étendant vers l'extérieur, de préférence en cercle, depuis le corps tubulaire du pot formant gaine (13).

9. Pompe centrifuge de type humide selon l'une des revendications précédentes, **caractérisée en ce que** la pompe (7) est conçue et forme pour opération avec un arbre (5) disposé horizontalement et **en ce qu'**au moins une ouverture (28) est prévue dans le carter de moteur (2), de préférence au niveau du côté inférieur, pour l'évacuation de liquide.

10. Pompe centrifuge de type humide selon l'une des revendications précédentes, **caractérisée en ce qu'**au moins l'une ouverture (28), est disposée axial dans la région dans laquelle se trouve aussi la collerette (16).

11. Pompe centrifuge de type humide selon l'une des revendications précédentes, **caractérisée en ce que** le moteur (1) est un moteur à aimants permanents (1) de préférence commandé par un régulateur de vitesse.

12. Pompe centrifuge de type humide selon l'une des revendications précédentes, **caractérisée en ce que** le joint d'étanchéité radiale (20), au moins au nombre de une, présente une lèvre d'étanchéité (24) dirigée radialement vers la partie tubulaire du pot formant gaine (13), et présente un siège d'étanchéité plat dirigé radialement vers l'intérieur au niveau de la plaque d'appui (19).

13. Pompe centrifuge de type humide selon l'une des revendications précédentes, **caractérisée en ce que** la partie tubulaire du pot formant gaine (13) se prolonge au-delà du fond du pot (14).

14. Pompe centrifuge humide selon l'une des revendications précédentes, **caractérisée en ce que** la plaque d'appui (19) présente un segment cylindrique creux (22), à l'intérieur duquel est logé le palier (18) et contre le côté extérieur duquel repose le joint d'étanchéité radiale (20).
